# EUROPÄISCHE PATENTSCHRIFT

(11) **EP 1 744 871 B1**
(45) Veröffentlichungstag und Bekanntmachung des Hinweises auf die Patenterteilung: **07.05.2008**
(21) Anmeldenummer: 05739579.0
(22) Anmeldetag: 09.05.2005
(51) Int. Cl.: B29C 67/00

(54) **VERFAHREN ZUR HERSTELLUNG EINES DREIDIMENSIONALEN OBJEKTS MIT AUFLÖSUNGSVERBESSERUNG MITTELS PIXEL-SHIFT**
METHOD FOR PRODUCING A THREE-DIMENSIONAL OBJECT WITH RESOLUTION ENHANCEMENT BY MEANS OF PIXEL SHIFT
PROCEDE DE PRODUCTION D'UN OBJET EN TROIS DIMENSIONS A RESOLUTION AMELIOREE PAR DECALAGE DE PIXELS

(30) Priorität: 10.05.2004 DE 102004022961; 10.05.2004 US 569893 P
(43) Veröffentlichungstag der Anmeldung: 24.01.2007
(60) Teilanmeldung: 07024525.3
(73) Patentinhaber: Envisiontec GmbH, 45968 Gladbeck (DE)
(72) Erfinder: SHKOLNIK, Alexandr, Los Angeles, CA 90046 (US); JOHN, Hendrik, 46569 Hünxe (DE); EL-SIBLANI, Ali, Dearborn Heights, MI 48127 (US)
(74) Vertreter: Oser, Andreas
(86) Internationale Anmeldenummer: PCT/EP2005/005003
(87) Internationale Veröffentlichungsnummer: WO 2005/110722

(56) Entgegenhaltungen:
- EP-A- 0 958 912
- FR-A- 2 692 053

## Beschreibung

### Anwendungsgebiet

Die Erfindung betrifft ein Verfahren und eine Vorrichtung zur Herstellung eines dreidimensionalen Objekts durch schichtweises Verfestigen eines photohärtenden Materials durch Maskenbelichtung mittels einer gerasterten bildgebenden Einheit mit konstanter Auflösung, wobei die Auflösung in der Bild-/Bauebene im Subpixelbereich verbessert werden soll.

### Stand der Technik

Für den schichtweisen Aufbau dreidimensionaler Objekte aus "lichthärtenden" Materialien werden in der Literatur unterschiedlichste Verfahren angegeben, siehe hierzu "Automated Fabrication - Improving Productivity in Manufacturing" von Marshall Burns, 1993 (ISBN 0-13-119462-3).

Diese Efindung betrifft Verfahren, bei denen die zu erzeugende Schicht durch die Belichtung mittels einer gerasterten Maske beruht, wobei die kleinste physikalische Auflösung in der Maske durch die Größe eines Pixels gegeben ist.

Derzeit bekannte Möglichkeiten sind u.a. die Belichtung durch
a) Projektionseinheit (auf Basis DLP^{®}/DMD^{®}, LCD, ILA^{®}, etc.)
b) LC-Display (reflexiv, transmissiv)
c) LED-, bzw. Laser-Dioden-Zeile/-Matrix (die in XY über die Schicht bewegt wird)
d) auf MEM's-Technologie (light-valve) basierende Zeile ode Matrix (die in XY über die Schicht bewegt wird)
Einige dieser Methoden werden in folgenden Patenten beschrieben:
IPC: B29C67/00 "Rapid Prototyping apparatus and method of Rapid Prototyping" von Dicon AS (DK), (Anmeldung)
US-Patent US005247180A "Stereolithographic Apparatus and Method of use" von Texas Instruments Inc., Sept. 1993.
US-Patent US005980813A "Rapid Prototyping using multiple materials" von SRI International, Nov. 1999;
Gebrauchsmusterschrift DE G 93 19 405.6 "Vorrichtung zur Herstellung eines dreidimensionalen Objekts (Modells) nach dem Prinzip der Photoverfestigung" vom Forschungszentrum Informatik an der Universität Karlsruhe, Dez. 1993;
eine Anwendung für die Erzeugung mikrotechnischer, dreidimensionaler Bauteile nach einem ähnlichen Verfahren wird in der Gebrauchsmusterschrift DE 299 11 122 U1 "Vorrichtung zum Herstellen eines dreidimensionalen Objektes", DeltaMed u.a., Juni 1999, beschrieben.
PCT-Patentanmeldung 02 008 019.8 "Vorrichtung zum Herstellen eines dreidimensionalen Objektes" der Envision Technologies GmbH, April 2002.

In der US 6,180,050 wird eine lineare Scan-Technik zur schichtweisen Verfestigung bei der Herstellung dreidimensionaler Bauteile beschrieben. Die Auflösung wird erhöht, indem ein Belichtungskopf mit einem Array von optischen Fasern, die in Y-Richtung gegeneinander versetzt sind, linear in X-Richtung gescannt werden.

Die FR 2 692 053 A offenbart Verfahren und Vorrichtung zur Herstellung eines dreidimensionalen Objektes gemäß dem Oberbegriff der Ansprüche 1 und 7 durch schichtweises Verfestigen eines, unter Einwirkung von elektromagnentischer Strahlung verfestigbaren Materials mittels Maskenbelichtung, wobei die Maske über eine bildgebende Einheit mit festgelegter Auflösung erzeugt wird, die aus einer konstanten Anzahl diskreter und räumlich fest zueinander angeordneter, bildgebender Elemente (Pixel) gebildet wird.

### Nachteile Stand der Technik

Bei allen den oben beschriebenen Verfahren steht die Auflösung der zu härtenden Materialschicht in direkter Abhängigkeit mit der Auflösung des bildgebenden Verfahrens.

Bei den Projektionsverfahren bestimmt zusätzlich eine zwischengeschaltete Optik den Maßstab der projezierten, bzw. auszuhärtenden Schicht.

Die Auflösung pro Flächeneinheit in der Bild-/Bauebene ist somit abhängig a) von der Auflösung der bildgebenden Einheit bzw. dem kleinsten Element, genannt Pixel und deren relative Abstände zueinander, genannt Pixel-Pitch und b) dem Projektionsmaßstab.

Die Oberflächen-Rauhigkeit des Bauteils ist somit bestimmt durch die kleinste Volumeneinheit eines Voxels (Volumen-Pixels), dessen Größe sich zusammensetzt aus der der projizierten Pixelfläche in XY und der Schichtdicke in Z.
Die Auflösung der Schichtdicke ist vorgegeben durch die kleinste Auflösung (Schrittgröße) des Aktuators in Z um die Trägerplattform zu bewegen. Hier können bereits Auflösungen bis in den enstelligen µm-Bereich erreicht werden.
Soll eine niedrigere Oberflächen-Rauhigkeit des Bauteils erreicht werden, muss das Projektionsfeld und damit einhergehend die Pixelfläche verkleinert werden.

Als Beispiel sei hier die Projektion m.H. eines Multimedia-Projektors angegeben; bei einer Auflösung von XGA (1024 x 768 Bildpunkten), einem Pixel von 17 µm und einem Pixel-Pitch von 17,9 µm erreicht man bei einer Projektion auf 275mm x 206mm mit einem vergrößerungsfaktor der Projektionsoptik von 15 eine Auflösung in der Bild-/Bauebene und somit der auszuhärtenden Schicht von annähernd 100dpi, was einer Pixelgröße in der Projektionsebene von rund 0,254 mm x 0,254 mm entspricht.

Um die Auflösung in der Bild-/Bauebene bei gleichbleibender Baufläche z.B. zu verdoppeln, wird bei den Projektionsverfahren vorgeschlagen, den Projektions-/Vergrößerungsfaktor zu halbieren (was eine Viertelung der Fläche bedeutet) und entweder die gesamte Projektionseinheit oder den Bauraum paralle zueinander zwecks Belichtung der vier Teilebenen zu verschieben.

Dieses Verfahren hat den erheblichen Nachteil, dass relativ große Massen sehr präzise zueinander bewegt werden müssen, um eine exaktes Aneinanderstoßen und eine innige Verbindung der Teilebenen zu gewährleisten, was für die dazu notwendige Mechanik einen erheblichen Kostenaufwand und zusätzlichen Platzbedarf in der gesamten Anordnung bedeutet.

Bei der selektiven direkten Belichtung durch das Abscannen m.H. einer LED-, bzw. Laser-Dioden-Zeile/-Matrix oder die direkte Belichtung durch eine Maske, die durch einen transmissiven LCD ausgebildet ist, ist die Auflösung in der Bauebene gleich der Auflösung in der bildgebenden Einheit.

### Aufgabe der Erfindung

Aufgabe der Erfindung ist es, ein Verfahren bzw. eine Vorrichtung bereitzustellen, die es ermöglicht, die Auflösung in der Bauebene bei gleich bleibend großer Baufläche um ein Vielfaches im Subpixelbereich zu erhöhen, d.h. die Rasterung der Außen- und Innenkonturen in den Schnittebenen des Objektes zu verfeinern,
a) ohne eine Belichtung in aneinandergesetzten Teilflächen vornehmen zu müssen und
b) ohne die Auflösung der gerasterten, bildgebenden Einheit selbst zu erhöhen.

### Lösung der Aufgabe

Diese Aufgabe wird durch ein Verfahren mit den Merkmalen nach Anspruch 1 bzw. durch eine Vorrichtung mit den Merkmalen nach Anspruch 7 gelöst. Bevorzugte Weiterbildungen des erfindungsgemäßen Verfahrens bzw. der erfindungsgemäßen Vorrichtung sind in den Unteransprüchen angegeben.

### Beschreibung der Erfindung und deren Vorteile

Durch das erfindungsgemäße Verfahren bzw. die erfindungsgemäße Vorrichtung wird die Auflösung in der Bild-/Bauebene im Subpixelbereich mittels "Pixel-Shift" verbessert. Insbesondere handelt es sich bei der Erfindung um ein schichtweises Verfestigen zur Herstellung dreidimensionaler Bauteile bzw. Körper durch Materialverfestigung (speziell durch Photopolymerisation) mittels Maskenprojektion, und nicht um eine herkömmliche schichtweise Verfestigung mittels (linearer) Scantechnik. Dies kann erfindungsgemäß sehr effektiv und vorteilhaft durch die Anwendung eines zweidimensional festgelegten Arrays als bildgebendem Element ausgeführt werden, bei dem Rasterung und/oder Auflösung fest vorgegeben ist/sind, z.B. durch ein fixes Mikrospiegel-Array.

Im Vergleich zur Scan-Technik, bei Canon als VAROS (Variable Refraction Optical System) und bei Epson als "Double-CCD" bezeichnet, wird das Prinzip, dem Einlesen und Überlagern von im Subpixel-Bereich zueinander versetzter Bilder, in dieser Efindung für gerasterte bildgebende Verfahren im Rapid Prototyping eingesetzt.

Die Auflösung bzw. die Anzahl der Bildpunkte der gerasterten, bildgebenden Einheit selbst muß nicht erhöht werden, um eine Verbesserung der Auflösung in der Bauebene zu erreichen.

Zur Erhöhung der Auflösung erfolgt die Belichtung nicht in nebeneinander angeordneten entsprechend verkleinerten Teilflächen, wodurch sich die Bau-/Belichtungszeit der Gesamtfläche um die Anzahl der Teilflächen erhöhen würde, sondern die Projektion/Belichtung erfolgt über die gesamte Baufläche.

Dadurch dass eine Überlagerung der im Subpixel-Bereich zueinander versetzten Bilder stattfindet erhöht sich die Bau-/Belichtungszeit der Gesamtfläche nur unwesentlich.

Der Grad der Auflösungsverbesserung in der Bauebene ist frei wählbar.

### Beschreibung der Zeichnungen und der bevorzugten Ausführungsformen der Erfindung

Die vorliegende Erfindung wird nachfolgend beispielhaft und nicht einschränkend anhand von Zeichnungen näher erläutert.

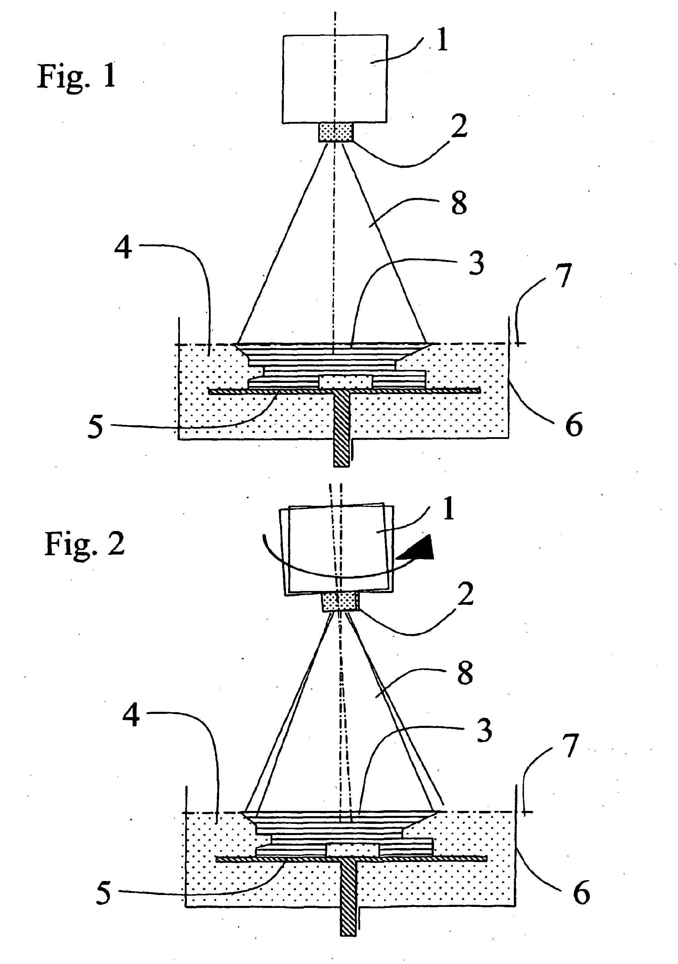

Fig. 1 zeigt schematisch eine grundsätzliche Vorrichtung zur Generierung eines dreidimensionalen Objekts 3 durch schichtweise Aushärtung eines photohärtenden Materials 4 mittels Maskenprojektion 8, wobei sich die Projektionseinheit 1 mit einer abbildenden Optik 2 oberhalb des Beckens 6, gefüllt mit photohärtendem Material 4, befindet und das Objekt 3 schichtweise auf einer Trägerplatte 5 aushärtet, die innerhalb des Beckens 6 in vertikaler Richtung bewegt werden kann.

Bei einem auf Photohärtung basierenden Verfahren mittels Maskenbelichtung wird die zum Härten notwendige Strahlung in die Bild-/Bauebene 7 projiziert. Die Belichtung wird mit Hilfe einer gerasterten bildgebenden Einheit ausgeführt, die als Matrix ausgebildet ist. Das Bild setzt sich dabei aus einzelnenen Bildpunkten (Pixeln) zusammen und bildet so eine gerasterte Maske (Bitmap), wobei die Pixel in der Ebene räumlich zueinander fest angeordnet sind.

Fig. 8 - 12 zeigen an einem einfachen Beispiel das Prinzip der Maskengenerierung (Bitmapping) einer Querschnittsfläche eines dreidimensionalen Objektes in der Ausgangspostion (Fig. 8) und in unterschiedlichen, im Subpixelbereich versetzten (geshifteten) Zuständen der Bitmap (Fig. 9 - 11), sowie die Überlagerung sämtlicher Bitmaps (Fig. 12).

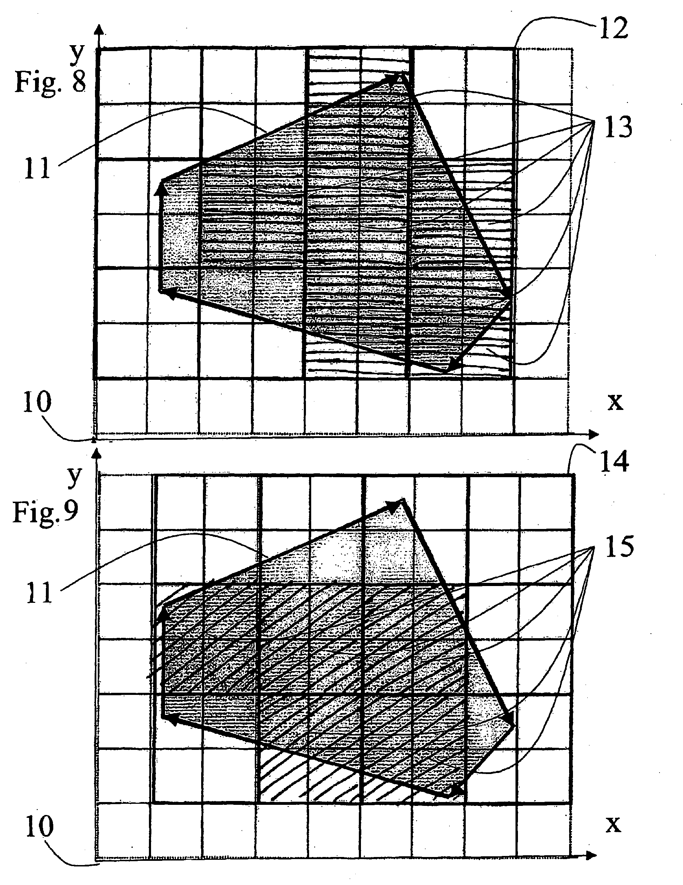

Die Querschnittsfläche, d.h. Außen- und Innenkonturen, wird durch einen Vektorzug 11 beschrieben, der von einer gerasterten Fläche (Bitmap) 12 überlagert wird, deren Auflösung exakt der Auflösung der diskreten Elemente (Pixel) im projizierten Bild 8 entspricht, welches durch die bildgebende Matrix erzeugt wird. Vektorzug 11 und Bitmap 12 befinden sich dabei in einem übergeordneten XY-Koordinatensystem 10. Fig. 8 zeigt die Bitmap in ihrer Ausgangsposition. Durch einen speziellen Algorithmus werden die aktiven Pixel 13 berechnet, die in der Bitmap 12 in der Ausgangsposition die Querschnittsfläche beschreiben.

In Fig. 9 wurde die Bitmap 14 relativ zur Querschnittsfläche um Delta X im Subpixelbereich versetzt, wodurch sich eine neue Verteilung der aktiven Pixel 15 ergibt.

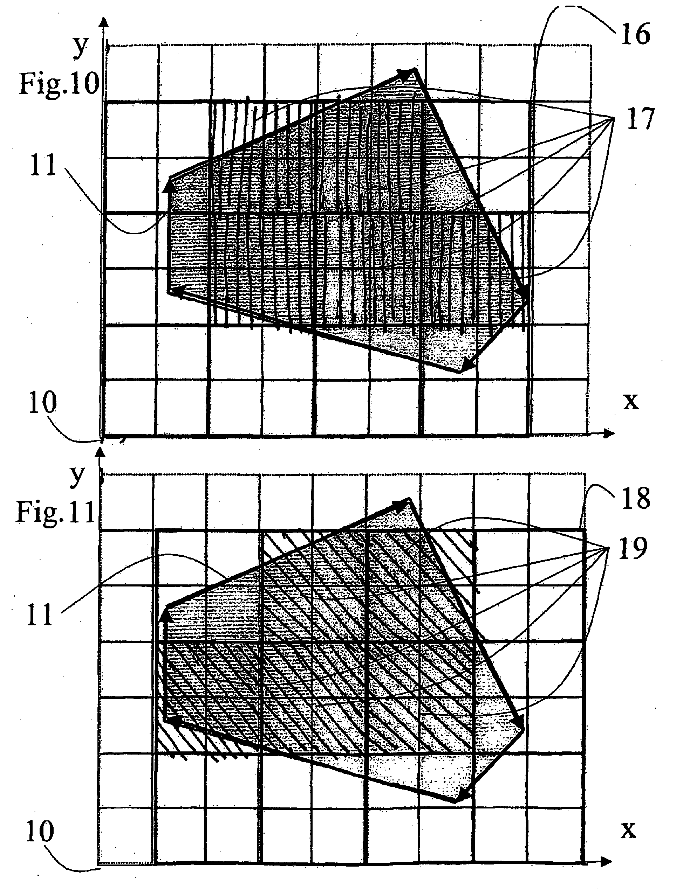

Fig. 10 zeigt einen Versatz der Bitmap 16 relativ zur Querschnittsfläche um Delta Y mit den aktiven Pixeln 17.

Fig. 11 zeigt einen Diagonal-Versatz der Bitmap 18 relativ zur Querschnittsfläche Delta X und Delta Y mit den aktiven Pixeln 19.

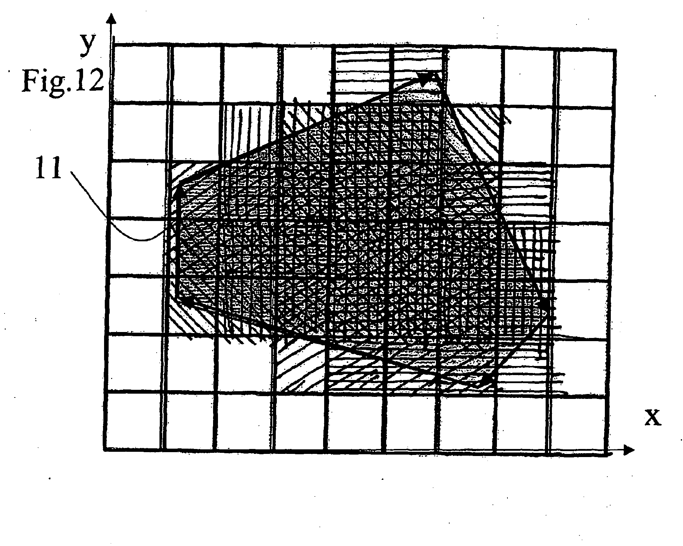

In Fig. 12 sind alle Bitmaps 12, 14, 16 und 18 mit ihren aktiven Pixeln 13, 15, 17 und 19 überlagert dargestellt, wobei eindeutig eine Auflösungsverbesserung im (Aussen-)Konturbereich der Querschnittsfläche zu erkennen ist.

Ein vereinfachtes Verfahren zur Auflösungsverbesserung wird dadurch erreicht, indem nur die Bitmap 12 der Ausgangsposition (Fig. 8) und die Bitmap 18 des Diagonal-Versatzes (Fig. 11) überlagert werden. In diesem Fall muss die Bitmap, bzw. das Bild nur in eine Richtung entlang der Pixel-Diagonalen geshiftet werden.

Je nach gewünschter Auflösungsverbesserung kann für jede Objektschicht ein Mehr- bzw. Vielfaches (mindestens zweifach) an Masken bzw. Bitmaps mit unterschiedlichem Subpixelversatz generiert und überlagert werden.

Durch eine unterschiedlich versetzte und überlagerte Belichtung jeder Objekt-/Materialschicht (hier mittels der Bitmaps 12, 14, 16, 18) wird eine Auflösungsverbesserung in XY im Bereich der Außen- und Innenkonturen erzielt. Um die jeweilige Subpixel-Verschiebung des Bildes in der Bauebene zu erreichen, werden im folgenden unterschiedliche Ausführungsformen beschrieben:
1) In Fig. 2 wird die bildgebende Einheit 1 je versetzter Bitmap so gekippt, dass die gewünschte Verschiebung des Bildes im Subpixelbereich in der Bild-/Bauebene erreicht wird.

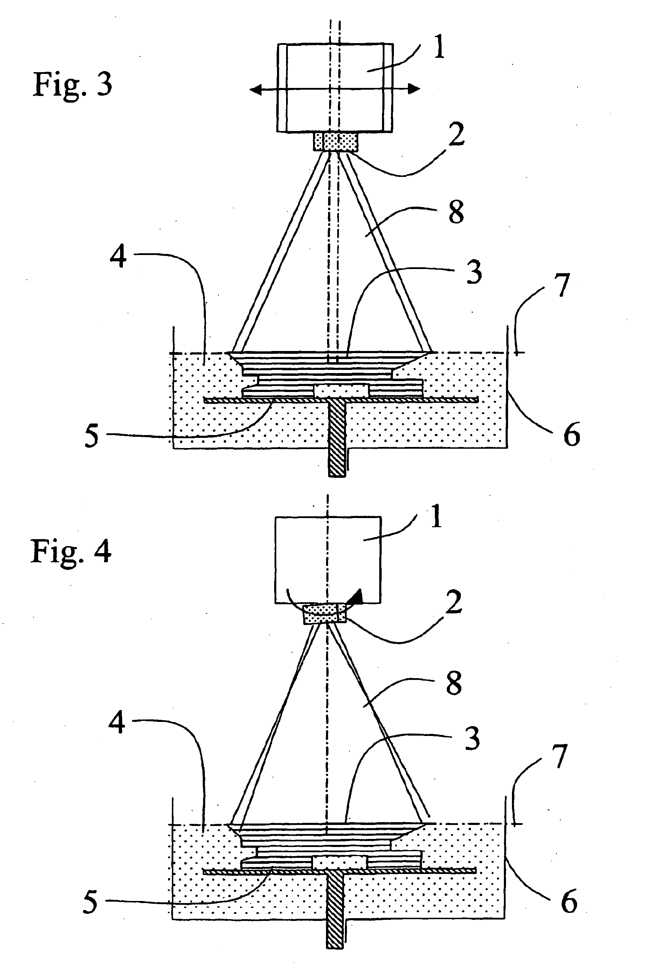

2) In Fig. 3 wird die bildgebende Einheit 1 je versetzter Bitmap um den entsprechenden Subpixelbereich in X und Y, also planparallel zur Bild-/Bauebene durch Aktuatoren versetzt.
3) In Fig. 4 bleibt die bildgebende Projektionseinheit in ihrer Position fest. Die abbildende Optik 2 wird je versetzter Bitmap so gekippt, dass die gewünschte Verschiebung des Bildes in der Bild-/Bauebene im Subpixelbereich erreicht wird.

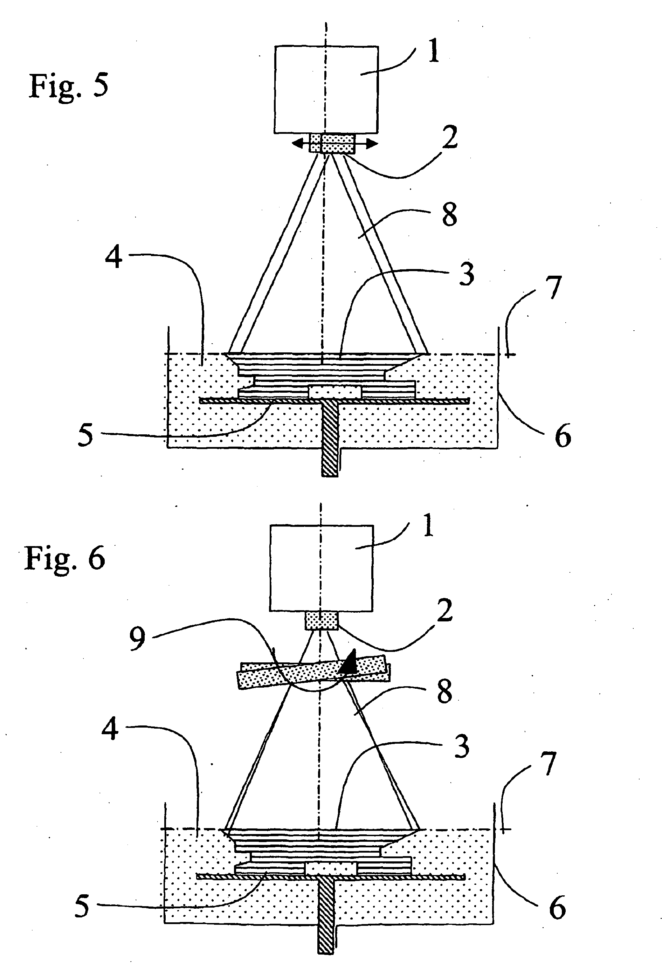

4) In Fig. 5 bleibt die bildgebende Projektionseinheit in ihrer Position fest. Die abbildende Optik 2 wird je versetzter Bitmap in XY so verschoben, dass die gewünschte Verschiebung des Bildes in der Bild-/Bauebene im Subpixelbereich erreicht wird.
5) Sonderfall für Abbildungen mit bildseitig telezentrischen Strahlengang, bildseitig annähernd telezentrischen Strahlengang und Teleobjektiven mit langer Brennweite, um die optischen Fehler (Winkelfehler, Verzeichnung) klein zu halten:
   a) In Fig. 5 wird die Projektionseinheit 1 je versetzter Bitmap über Aktuatoren so verkippt, dass das Projektionsbild 8 in der Bild-/Bauebene 7 im entsprechenden Subpixelbereich in X und Y versetzt wird.
   b) In Fig. 6 ist zwischen Projektionseinheit 1 und Bild-/Bauebene 7 eine kardanisch aufgehängte transparente planparallele Platte 9 (Glasplatte) angeordnet, die durch Rotation um zwei Achsen (XY), die sich planparallel zur Bild-/Bauebene befinden, den Projektionsstrahlengang 8 und somit das Bild in der Bild-/Bauebene 7 im Subpixelbereich in X und Y versetzt.

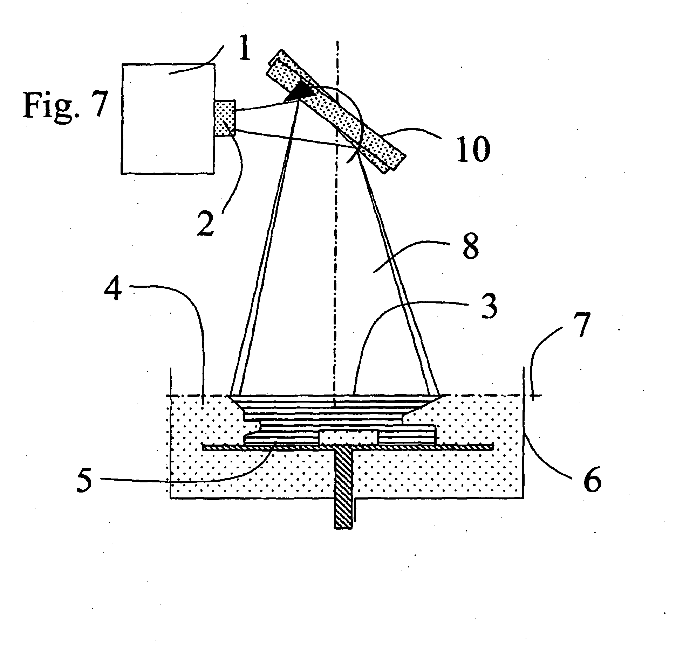

   c) In Fig. 7 bleibt die Projektionseinheit 1 in ihrer Position fest. Der Projektionsstrahl 8 wird über einen Spiegel 10 in die Bild-/Bauebene 7 umgelenkt. Der Umlenkspiegel 10 verfügt über eine Verstellmöglichkeit (kardanische Lagerung), durch die der Projektionsstrahl je versetzter Bitmap so abgelenkt werden kann, dass in der Bild-/Bauebene 7 eine Verschiebung des Bildes im Subpixelbereich erreicht wird.

Die oben beschriebenen Ausführungsformen 1) bis 5) bzw. a) bis c) können einzeln verwirklicht oder miteinander kombiniert werden.

Die für die Maskenprojektion notwendigen Bitmaps jeder einzelnen Schicht werden aus Schichtdaten erzeugt, in denen die Außen- und Innenkonturen des jeweiligen Objektquerschnitts in Vektorzügen dargestellt sind (wie z.B. im Datenformat CLI definiert).

Hierzu wird eine spezielle SW verwendet, welche die Umrechnung der Vektorgrafiken in das Bitmap-Format (Bitmapping) ausführt.

Für jeden Subpixelversatz in XY wird eine separate Bitmap erzeugt, indem die XY-Koordinaten der Vektoren (für Außen- und Innenkonturen) der Schichtdaten mit dem jeweiligen Versatz-Offset in XY (im Subpixelbereich) transformiert und über das Bitmap-Raster gelegt werden und so eine neue Verteilung der aktiven Pixel je Versatz errechnet wird.

Die projezierte Lichtleistung pro Pixel kann durch "Graustufen" innerhalb einer Projektionsmaske variiert werden, um so den Aushärtegrad selektiv in einer Schicht zu beeinflussen. Dies ist insbesondere sinnvoll, um Lichtleistung der Kontur-Pixel anzuheben, da sich hier aufgrund des Subpixelversatzes der einzelnen Bitmaps nur Teilüberlagerungen der jeweiligen Kontur-Pixel ergeben (in den Flächen innerhalb der Konturen ist eine vollständige Überlappung der Pixel der einzelnen Bitmaps gewährleistet).

Bei der Projektion / Überlagerung der um Subpixel versetzten Schichtbilder kann durch Überlagern von Graustufen insbesondere entlang der Konturen der projezierten Flächenstruktur eine nahezu homogene Verteilung der Lichtleistung bzw. der Belichtungsintensität über die Summe der Graustufenmasken erzielt werden.

## Patentansprüche

1. Verfahren zur Herstellung eines dreidimensionalen Objektes (3) durch schichtweises Verfestigen eines, unter Einwirkung von elektromagnentischer Strahlung verfestigbaren Materials (4) mittels Maskenbelichtung, wobei die Maske über eine bildgebende Einheit (1) mit festgelegter Auflösung erzeugt wird, die aus einer konstanten Anzahl diskreter und räumlich fest zueinander angeordneter, bildgebender Elemente oder Pixel gebildet wird, **dadurch gekennzeichnet, dass**, zur Verbesserung der Auflösung entlang der Aussen- und Innenkonturen der Querschnittsflächen des schichtweise zu generierenden Objektes (3) im Subpixelbereich, pro Schicht eine Mehrfachbelichtung vorgenommen wird, die aus einer Abfolge einer Mehrzahl von zueinander im Subpixelbereich versetzten Bildern in der Bild-/Bauebene besteht, wobei für jedes versetzte Bild eine separate Maske/Bitmap (12, 14, 16, 18) erzeugt wird.

2. Verfahren nach Anspruch 1,
**dadurch gekennzeichnet, dass** die bildgebende Einheit (1) aus einer konstanten Anzahl diskreter und in einer zweidimensionalen Matrix, räumlich fest zueinander angeordneter, bildgebender Elemente oder Pixel gebildet wird.

3. Verfahren nach Anspruch 1 oder 2
**dadurch gekennzeichnet, dass** eine Abfolge von mindestens 2 zueinander im Subpixelbereich versetzten Bildern in der Bild-/Bauebene durchgeführt wird, entsprechend der Auflösung der bildgebenden Einheit (1) und unter Berücksichtigung des entsprechenden Subpixelversatzes.

4. Verfahren nach einem der Ansprüche 1 - 3,
**dadurch gekennzeichnet, dass** die Maskengenerierung oder das Bitmapping einer jeden Querschnittsfläche eines dreidimensionalen Objektes (3) in der Ausgangspostion und in unterschiedlichen, im Subpixelbereich in XY versetzten oder geshifteten Zuständen erfolgt und durch die Überlagerung dieser Bitmaps pro Querschnittsfläche ein Gesamtbild mit entsprechend dem Pixelshift erhöhten Auflösung im Konturbereich entsteht.

5. Verfahren nach einem der Ansprüche 1 - 4,
wobei je nach gewünschter Auflösungsverbesserung für jede Objektschicht ein Vielfaches an Masken bzw. Bitmaps mit unterschiedlichem Subpixelversatz in XY generiert und pro auszuhärtender Schicht seriell belichtet werden kann.

6. Verfahren nach einem der vorangehenden Ansprüche,
**dadurch gekennzeichent, dass** die projezierte Lichtleistung pro Pixel durch "Graustufen" innerhalb einer Projektionsmaske variiert werden, um so den Aushärtegrad selektiv in einer Schicht zu beeinflussen und so die Lichtleistung der Kontur-Pixel relativ zur Lichtleistung der Flächen-Pixel anzuheben, um die Teilbelichtung aufgrund Teilüberlagerung der Konturpixel durch den Subpixelversatzes der einzelnen Bitmaps im Konturbereich zu kompensieren.

7. Vorrichtung zur Herstellung eines dreidimensionalen Objektes (3) durch schichtweises Verfestigen eines, unter Einwirkung von elektromagnentischer Strahlung verfestigbaren Materials mittels Maskenbelichtung, wobei die zum Härten notwendige Strahlung in die Bild-/Bauebene (7) abgebildet wird,
wobei die Vorrichtung eine gerasterte bildgebende Einheit (1) zur selektiven Belichtung, die entweder als Zeile oder Matrix ausgebildet ist, aufweist,
**dadurch gekennzeichnet, dass** die bildgebende Einheit (1) das Bild aus einzelnenen Bildpunkten oder Pixeln zusammensetzt und so eine gerasterte Maske oder Bitmap (12, 14, 16, 18) bildet, wobei die Pixel in der Ebene räumlich zueinander fest angeordnet sind,
und dass die bildgebende Einheit und/oder eine zwischen bildgebender Einheit (1) und der Bild-/Bauebene vorgesehene, abbildende Optik (2) so ausgestaltet ist/sind, dass eine Abfolge einer Mehrzahl von zueinander im Subpixelbereich versetzten Bildern in der Bild-/Bauebene darstellbar ist, wobei für jedes versetzte Bild eine separate Maske/Bitmap erzeugbar ist.

8. Vorrichtung nach Anspruch 7,
**dadurch gekennzeichnet, dass** die bildgebende Einheit (1) zur selektiven Belichtung als Matrix ausgebildet ist.

9. Vorrichtung nach Anspruch 7 oder 8,
**dadurch gekennzeichnet, dass** eine Abfolge von mindestens. 2 zueinander im Subpixelbereich versetzten Bildern in der Bild-/Bauebene darstellbar ist.

10. Vorrichtung nach einem der Ansprüche 7 bis 9,
**dadurch gekennzeichnet, dass** es sich bei der bildgebenden Einheit (1) um eine Projektionseinheit handelt.

11. Vorrichtung nach einem der Ansprüche 7 bis 10,
**dadurch gekennzeichnet, dass** es sich bei der bildgebenden Einheit um eine Zeile, insbesondere um eine Matrix mit diskret emittierenden Elementen zur Bilderzeugung handelt.

12. Vorrichtung nach einem der Ansprüche 7 - 11,
**dadurch gekennzeichnet, dass** die Vorrichtung mit Aktuatoren ausgestattet ist, um die gesamte bildgebende Einheit pro Teilbild planparallel zur Bild-/Bauebene in XY im Subpixelbereich zu verschieben.

13. Vorrichtung nach einem der Ansprüche 7 - 12,
**dadurch gekennzeichent, dass** die Vorrichtung mit Aktuatoren ausgestattet ist, die die bildgebende Einheit pro versetzt generierter Bitmap so abwinkeln können, dass die einzelnen versetzt generierten Bitmaps in der Bild-/Bauebene im Subpixelbereich verschoben abgebildet werden.

14. Vorrichtung nach einem der Ansprüche 7 - 13,
**dadurch gekennzeichent, dass** zwischen der bildgebenden Einheit (1) und der Bild-/Bauebene als abbildende Optik ein Spiegel (10) angeordnet und kardanisch gelagert und über Aktuatoren so schwenkbar ist, dass der Strahlengang in die Bidlebene umgelenkt wird und die einzelnen versetzt generierten Bitmaps in der Bild-/Bauebene im Subpixelbereich entsprechend verschoben abgebildet werden können.

15. Vorrichtung nach einem der Ansprüche 7 - 14,
**dadurch gekennzeichnet, dass** zwischen der bildgebenden Einheit (1) und der Bild-/Bauebene als abbildende Optik eine transparente Platte mit zueinander planparallelen Flächen angeordnet ist und mittels einem oder mehrerer Aktuatoren so gekippt werden kann, dass der Strahlengang versetzt wird und die einzelnen versetzt generierten Bitmaps in der Bild-/Bauebene im Subpixelbereich verschoben abgebildet werden.

16. Vorrichtung nach einem der Ansprüche 7 - 12,
**dadurch gekennzeichnet, dass** die bildgebende Projektionseinheit (1) in ihrer Position fest bleibt und die abbildende Optik in XY im Subpixelbereich der bildgebenden Einheit über Aktuatoren so verschoben werden kann, dass die gewünschte Verschiebung des Bildes in der Bild-/Bauebene im Subpixelbereich erreicht wird.

17. Vorrichtung nach einem der Ansprüche 7 - 12,
**dadurch gekennzeichnet, dass** die bildgebende Projektionseinheit (1) in ihrer Position fest bleibt und die abbildende Optik über Aktuatoren so gekippt werden kann, dass die gewünschte Verschiebung des Bildes in der Bild-/Bauebene im Subpixelbereich erreicht wird.

## Claims

1. A process for the production of a three-dimensional object (3) by layer-wise solidification of a material (4) solidifiable by the action of electromagnetic irradiation by means of mask illumination, wherein the mask is generated by an image forming unit (1) having a prescribed resolution, which mask is formed from a constant number of image forming elements or pixels being discrete and spatially arranged in a fixed manner to each other, **characterized in that**, for improving the resolution in the sub-pixel range along the outer and inner contours of the sectional areas of the object (3) to be generated layer-wise, a multiple illumination is carried out for each layer which consists of a sequence of a multitude of images mutually shifted in the sub-pixel range in the image/construction plane, wherein a separate mask/bitmap (12,14,16,18) is produced for each shifted image.

2. The process according to claim 1, **characterized in that** said image forming unit (1) is formed of a constant number of image forming elements or pixels being discrete and spatially arranged to each other in a two-dimensional matrix.

3. The process according to claim 1 or 2, **characterized in that** a sequence of at least 2 images mutually shifted in the sub-pixel range is carried out in the image/construction plane, corresponding to the resolution of the image forming unit (1) and under consideration of the corresponding sub-pixel shift.

4. The process according to one of claims 1 - 3, **characterized in that** the mask generation or bitmapping of each sectional area of a three-dimensional object (3) is carried out in the starting position and in various states displaced or shifted in the sub-pixel range in XY, and that a total image having an enhanced resolution in the contour portion corresponding to the pixel shift is obtained by the superimposition of these bitmaps per sectional area.

5. The process according to one of claims 1 - 4, wherein, for each layer of the object, a multitude of masks or bitmaps having different sub-pixel shifts in XY can be generated and can be illuminated serially for each layer to be hardened.

6. The process according to one of the preceding claims, **characterized in that** the projected light output for each pixel is varied by "grey scaling" within a projection mask, in order to selectively influence the hardening level in a layer thereby and thus to raise the light output of the contour-pixel relative to the light output of the area-pixel, in order to compensate the partial illumination due to partial superimposition of a contour-pixel by the sub-pixel shift of the individual bitmap in the contour portion.

7. A device for the production of a three-dimensional object (3) by layer-wise solidification of a material which is solidifiable under the application of electromagnetic irradiation by means of mask illumination, whereby the irradiation necessary for hardening is imaged into the image/construction plane (7), wherein the device comprises a rastered, image forming unit (1) for the selective illumination, which is embodied either by line or by matrix, **characterized in that** the image forming unit (1) composes the image from individual image dots or pixels and thus forms a rastered mask or bitmap (12,14,16,18), wherein the pixels are arranged within the plane in a manner mutually fixed to each other, and that the image forming unit and/or an imaging optic (2) which is provided between the image forming unit (1) and the image/construc-tion plane is/are designed such that a sequence of a multitude of images, which are mutually shifted in a sub-pixel range, can be created, wherein a separate mask/bitmap is producible for each shifted image.

8. The device according to claim 7, **characterized in that** said image forming unit (1) for the selective illumination is embodied by a matrix.

9. A device according to claim 7 or 8, **characterized in that** a series of at least 2 images, which are mutually shifted in a sub-pixel range, can be created in the image/construction plane.

10. A device according to one of claims 7 to 9, **characterized in that** said image forming unit (1) is a projection unit.

11. A device according to one of claims 7 to 10, **characterized in that** said image forming unit is a line, particularly a matrix having discretely emitting elements for image formation.

12. A device according to one of claims 7 - 11, **characterized in that** the device is provided with actuators in order to shift the whole image forming unit per partial image in a plane-parallel manner towards the image/construction plane in XY in the sub-pixel range.

13. A device according to one of claims 7 - 12, **characterized in that** the device is provided with actuators which can tilt the image forming unit per shift-generated bitmap such that the individual, shift-generated bitmaps in the image/construction plane are imaged in a manner shifted in the sub-pixel range.

14. A device according to one of claims 7 - 13, **characterized in that**, between the image forming unit (1) and the image/construction plane, a mirror (10) is arranged as an imaging optic and is cardanically mounted and is rotatable via actuators such that the beam path is deflected into the image plane and that the individual, shift-generated bitmaps in the image-/construction plane can be imaged in a correspondingly shifted manner in the sub-pixel range.

15. A device according to one of claims 7 - 14, **characterized in that**, between the image forming unit (1) and the image/construction plane, a transparent plate having mutual plane-parallel surfaces is arranged as an imaging optic and can be tilted by means of one or more actuators such that the beam path is shifted and that the individual, shift-generated bitmaps in the image-/construction plane are imaged in a manner shifted in the sub-pixel range.

16. A device according to one of claims 7 - 12, **characterized in that** the image forming projection unit (1) is maintained fixed in its position and that the imaging optic can be shifted in XY in a sub-pixel range of the image forming unit via actuators such that the desired shift of the image in the image-/construction plane in a sub-pixel range is achieved.

17. A device according to one of claims 7 - 12, **characterized in that** the image forming projection unit (1) is maintained fixed in its position and that the imaging optic can be tilted via actuators such that the desired shift of the image in the image/construction plane in the sub-pixel range is achieved.

## Revendications

1. Procédé de fabrication d'un objet (3) en trois dimensions, par durcissement couche par couche d'un matériau (14), durcissable sous l'effet d'un rayonnement électromagnétique, au moyen d'un éclairage à masques, où le masque est produit par l'intermédiaire d'une unité de reproduction d'image (1), avec une résolution fixée formée d'un nombre constant d'éléments de reproduction d'image ou de pixels, discrets et disposés de façon spatialement fixe les uns par rapport aux autres, **caractérisé en ce que**, pour améliorer la résolution le long des contours extérieurs et intérieurs des surfaces de section transversale de l'objet (13), à générer couche par couche, dans le domaine des sous-pixels, on procède pour chaque couche à une exposition à la lumière multiple, composée d'une succession formée d'une pluralité d'images, décalées les unes par rapport aux autres dans le domaine des sous-pixels, dans le plan image/de construction, sachant que, pour chaque image décalée est produit un masque/mappe binaire (12, 14, 16, 18) séparé(e).

2. Procédé selon la revendication 1, **caractérisé en ce que** l'unité de reproduction d'image (1) est formée d'un nombre constant d'éléments de reproduction d'image ou de pixels, discrets et disposés en une matrice bidimensionnelle, de façon spatialement fixe les uns par rapport aux autres.

3. Procédé selon la revendication 1 ou 2, **caractérisé en ce qu'**une succession d'au moins 2 images, décalées les unes par rapport aux autres dans le domaine des sous-pixels, dans le plan image/de construction est effectuée, de manière correspondante à la résolution de l'unité de reproduction d'image (1) et en prenant en considération le décalage correspondant des sous-pixels.

4. Procédé selon l'une des revendications 1 à 3, **caractérisé en ce que** la génération de masques ou le mappage binaire de chaque surface de section transversale, d'un objet (3) en trois dimensions, se fait à la position de départ et en des états différents, décalés ou dévoyés en XY et, par la superposition de ces images en mode point, par surface de section transversale, est créée dans la zone de contour une image d'ensemble, ayant une résolution augmentée de manière correspondante à décalage des pixels.

5. Procédé selon l'une des revendications 1 à 4, où, selon l'amélioration souhaitée de la résolution, pour chaque couche d'objet, une pluralité de masques ou d'images en mode points, ayant un décalage différents des sous-pixels en XY, est générée, et peut être exposée à la lumière en mode sériel, pour chaque couche à durcir.

6. Procédé selon l'une des revendications précédentes, **caractérisé en ce que** la puissance lumineuse par pixel est modifiée, au moyen de "niveaux de gris", dans un masque de projection, pour ainsi influer de façon sélective sur le degré de durcissement dans une couche et ainsi augmenter la puissance lumineuse des pixels de contour par rapport à la puissance lumineuse des pixels de surface, pour compenser l'éclairement partiel, du fait de superposition partielle des pixels de contour, au moyen du décalage de sous-pixels des différentes images en mode points dans la zone de contour.

7. Dispositif de fabrication d'un objet (3) en trois dimensions, par durcissement couche par couche d'un matériau, durcissable sous l'effet d'un rayonnement électromagnétique, au moyen d'un éclairage à masques, le rayonnement nécessaire au durcissement étant imagé dans le plan image/de construction (7),
le dispositif présentant une unité de reproduction d'image (1) tramée, pour l'éclairage sélectif, réalisée soit sous forme de ligne soit sous forme de matrice,
**caractérisé en ce que** l'unité de reproduction d'image (1) compose l'image à partir de différents points image ou pixels, et forme ainsi un masque ou image en mode point (12, 14, 16, 18) tramé(e), les pixels étant disposés de façon spatialement fixe les uns par rapport aux autres dans le plan,
et **en ce que** l'unité de reproduction d'image et/ou une optique de reproduction d'images (2), prévue entre l'unité de reproduction d'image (1) et le plan image/de construction, est/sont réalisées de manière qu'une succession formée d'une pluralité d'images, décalées les unes par rapport aux autres dans le domaine des sous-pixels, dans le plan image/de construction, soit susceptible d'être représentée, sachant que, pour chaque image décalée, est produit un masque/mappe binaire séparé(e).

8. Dispositif selon la revendication 7,
**caractérisé en ce que** l'unité de reproduction d'image (1), devant effectuer une exposition sélective à la lumière, est réalisée sous forme de matrice.

9. Dispositif selon la revendication 7 ou 8,
**caractérisé en ce qu'**une succession, formée d'au moins 2 images, décalées les unes par rapport aux autres dans le domaine des sous-pixels, est susceptible d'être représentée dans le plan image/de construction.

10. Dispositif selon l'une des revendications 7 à 9,
**caractérisé en ce que**, concernant l'unité de reproduction d'image (1), il s'agit d'une unité de projection.

11. Dispositif selon l'une des revendications 7 à 10,
**caractérisé en ce que**, concernant l'unité de reproduction d'image (1), il s'agit d'une ligne, en particulier d'une matrice à élément émetteurs discrets, pour la production d'images.

12. Dispositif selon l'une des revendications 7 à 11,
**caractérisé en ce que** le dispositif est équipé d'actionneurs, pour déplacer l'ensemble de l'unité de reproduction d'image (1), par image partielle, de façon parallèle au plan image/de construction, en XY, dans le domaine des sous-pixels.

13. Dispositif selon l'une des revendications 7 à 12,
**caractérisé en ce que** le dispositif est équipé d'actionneurs, pouvant dévier angulairement l'unité de reproduction d'image, par image en mode point générée de façon décalée, de manière que les différentes images en mode point, générées de façon décalée, soient imagées dans le plan image/de construction, de façon décalée, dans le domaine des sous-pixels.

14. Dispositif selon l'une des revendications 7 à 13,
**caractérisé en ce qu'**un miroir est disposé et monté à la cardan, entre l'unité de reproduction d'image (1) et le plan image/de construction, à titre d'optique de reproduction d'images, et susceptible de pivoter, par l'intermédiaire d'actionneurs, de manière que le trajet des rayons soit dévié dans le plan image et que les différentes images en mode point, générées de façon décalée, puissent être reproduites dans le plan image/de construction, dans le domaine des sous-pixels, avec un décalage correspondant.

15. Dispositif selon l'une des revendications 7 à 14,
**caractérisé en ce qu'**une plaque transparente, ayant des surfaces planes parallèle les unes aux autres, est disposée entre l'unité de reproduction d'image (1) et le plan image/de construction, à titre d'optique de reproduction d'images, et peut être inclinée, à l'aide d'un ou plusieurs actionneurs, de manière que les différentes images en mode point, générées de façon décalée, puissent être reproduites dans le plan image/de construction, dans le domaine des sous-pixels.

16. Dispositif selon l'une des revendications 7 à 12,
**caractérisé en ce que** l'unité de projection (1) de reproduction d'image reste stationnaire à sa position, et l'optique de reproduction d'images est déplacée, par l'intermédiaire d'actionneurs, en XY, dans le domaine des sous-pixels de l'unité de reproduction d'image, de manière que le décalage souhaité de l'image dans le plan image/de construction, dans le domaine des sous-pixels, soit obtenu.

17. Dispositif selon l'une des revendications 7 à 12,
**caractérisé en ce que** l'unité de projection (1) de reproduction d'image reste stationnaire à sa position, et l'optique de reproduction d'images peut être inclinée, par l'intermédiaire d'actionneurs, de manière que le décalage souhaité de l'image dans le plan image/de construction, dans le domaine des sous-pixels, soit obtenu.
